# FASCICULE DE BREVET EUROPEEN

(11) **EP 2 002 961 B1**
(45) Date de publication et mention de la délivrance du brevet: **10.02.2010**
(21) Numéro de dépôt: 08290536.5
(22) Date de dépôt: 11.06.2008
(51) Int. Cl.: B29C 49/42, B65G 47/84, B29C 49/64, B29B 11/14

(54) **Chaîne de transfert pour préformes à poignée**
Transferstraße für Vorformlinge mit Griff
Transfer chain for preforms with handle

(30) Priorité: 13.06.2007 FR 0704200; 13.06.2007 FR 0704199
(43) Date de publication de la demande: 17.12.2008
(73) Titulaire: ADS (Société anonyme), 95310 Saint-Ouen-l'Aumône (FR)
(72) Inventeur: Ridosz, Lionel, 78100 Saint Germain en Laye (FR); Trassard, Patrick, 95100 Argenteuil (FR)
(74) Mandataire: Chambon, Gérard

(56) Documents cités:
- EP-A- 0 835 736
- WO-A-00/26001
- WO-A-99/62693
- WO-A-2007/101309

## Description

L'invention concerne une chaîne de transfert de préformes d'un poste d'arrivée des préformes vers un poste de moulage via un poste de chauffage des préformes et un poste de reprise, pour préformes pourvues chacune d'un corps tubulaire et d'une poignée intégrée.

Pour fabriquer des bouteilles ou flacons et plus généralement des récipients en matériau thermoplastique, il est connu d'utiliser des préformes obtenues par exemple par injection, qui se présentent sous la forme d'un corps tubulaire fermé à une extrémité tandis que son autre extrémité ouverte est pourvue d'une bague ou goulot généralement muni d'une collerette.

Les corps des préformes doivent subir un traitement thermique avant d'être expansés au cours d'une opération de moulage par soufflage ou étirage-soufflage.

Dans une chaîne de fabrication de ce type, les préformes circulent d'un poste de fabrication à l'autre et même dans certains postes eux-mêmes comme par exemple un four de traitement thermique.

Dans le but de fabriquer des récipients munis d'un moyen de préhension, notamment pour les récipients d'une contenance de plusieurs litres, on a imaginé de rapporter un tel moyen de préhension après la fabrication du récipient sous la forme, par exemple, d'un étrier ou autre. On a aussi imaginé de réaliser une préforme déjà munie d'une poignée intégrée comme décrit dans le document WO-0026001 A.

Toutefois dans ce dernier cas, et plus particulièrement comme dans ce document, avec une poignée pleine non soumise à l'étirage et au soufflage au moment du moulage, la présence de la poignée crée une difficulté pour le moulage mais aussi pour le chauffage de la préforme, avant ledit moulage.

En effet, si la partie tubulaire de la préforme doit subir un chauffage préalable au moulage dans un four approprié, la poignée, par contre, doit garder sa forme sur le produit fini et ne pas subir les effets dudit chauffage.

C'est pourquoi, on a notamment imaginé des moyens qui permettent de protéger la poignée lors du passage dans le four de chauffage, comme décrit également dans le document précité WO-0026001 A.

Dans ce cas, il est alors nécessaire de contrôler l'orientation angulaire des préformes pour tenir compte de la position de la poignée et du positionnement de ladite préforme dans le moule.

Selon les technologies on transporte les préformes col en haut ou col en bas comme dans l'art antérieur précité.

Le col de la préforme est généralement emmanché sur un mandrin pour son transfert et sa mise en rotation et généralement avec le col en bas, la préforme ne quittant plus ledit mandrin jusqu'à la sortie de la bouteille soufflée.

C'est la technologie choisie notamment pour le dispositif du document WO-0026001 A.

Or dans ce cas, le mandrin étant conservé comme dit ci-avant du départ de la préforme jusqu'à la fin du parcours de ladite préforme alors soufflée en récipient, tel qu'une bouteille, on maîtrise à tout instant l'orientation angulaire de la poignée de la préforme. La préforme restant solidaire du mandrin, son positionnement, ou orientation angulaire, est dit « positif ».

Les inventeurs ont cherché à concevoir une chaîne de transfert qui permet de contrôler l'orientation des préformes alors même que l'on utilise un poste de reprise, avant le poste de moulage. Dans le poste de reprise, les préformes sont libérées de leur moyen de préhension, c'est-à-dire sans contrôle « positif » de position par le moyen de préhension tout au long du parcours comme mentionné ci-avant, l'invention permettant un contrôle de position même pour un transport des préformes col en haut.

A cet effet, les inventeurs proposent une chaîne de transfert de préformes d'un poste d'arrivée des préformes vers un poste de moulage via un poste de chauffage des préformes du type précité de l'art connu, pour préformes pourvues chacune d'un corps tubulaire et d'une poignée intégrée, et comportant une pluralité d'éléments mobiles de préhension et de guidage des préformes, pourvus chacun d'un écran ou protecteur de forme correspondant à celle de la poignée de chaque préforme, le poste d'arrivée des préformes étant aménagé pour présenter en sortie les préformes orientées de manière choisie angulairement autour de leur axe longitudinal, lesquelles préformes étant alors reprises par les éléments mobiles de préhension qui sont en outre chacun mus dans le poste de chauffage, en translation et en rotation autour de l'axe longitudinal de la préforme, chaîne qui est par contre remarquable en ce qu'un moyen d'orientation est prévu pour orienter chaque élément de préhension et de guidage des préformes au voisinage de la sortie du poste d'arrivée pour orienter lesdits éléments afin que le protecteur de chacun d'entre eux vienne envelopper dans son mouvement la poignée de la préforme et l'entraîner dans cette position jusqu'au poste de chauffage, tandis qu'à la sortie du poste de chauffage est prévu un moyen de guidage et d'orientation destiné à orienter angulairement chaque élément de préhension dans une position voulue avant de libérer chaque préforme de manière orientée dans un poste de reprise des préformes.

Selon un mode de réalisation non obligatoire, le moyen de guidage et d'orientation disposé à la sortie du poste de chauffage est aménagé pour orienter chaque élément de préhension en sens inverse du sens choisi au voisinage de la sortie du poste d'arrivée.

Par exemple, pour une chaîne de transfert dans laquelle chaque élément mobile de préhension comporte, outre le protecteur, un mandrin destiné à s'introduire en partie dans le corps tubulaire de chaque préforme et comportant à sa partie supérieur un moyen d'entraînement en rotation destiné à coopérer avec un moyen conjugué dans le poste de chauffage, ledit mandrin comporte également un guide destinée à coopérer avec des cames de guidage et d'orientation disposés, d'une part, en amont du poste d'arrivée et d'autre part, en sortie du poste de chauffage.

Le poste d'arrivée des préformes de l'art connu comporte par exemple une roue de transfert du type décrit dans le document EP-0 963 333 B au nom du même demandeur, mais dans ce cas antérieur, les préformes ne sont pas munies de poignée et présentent donc une symétrie de révolution, de telle sorte que le soucis d'orientation desdites préformes n'existe pas, ladite roue étant alors munie de dents.

Une telle roue connue pour une chaîne de transfert selon l'invention pour préformes à poignée est donc inadaptée et les inventeurs ont imaginé à cet effet un mode de réalisation d'une chaîne de transfert qui est notamment remarquable en ce que le poste d'arrivée des préformes comporte une roue de transfert rotative qui est équipée d'un moyen de chargement et d'orientation angulaire des préformes pour orienter chaque préforme dans une position angulaire déterminée autour de son axe longitudinal et qui est disposé au-dessus de ladite roue de transfert rotative qu'il alimente, cette dernière étant munie d'une pluralité de supports périphériques disposés circulairement et pourvus chacun d'un logement destiné à recevoir et soutenir verticalement par sa poignée une préforme en la maintenant fixe en rotation autour de son axe longitudinal et de manière telle que ladite poignée soit dirigée tangentiellement par rapport au mouvement circulaire des supports, tandis que les éléments de préhension sont mus au voisinage de la sortie de ladite roue de transfert pour arriver tangentiellement au mouvement circulaire des préformes.

De préférence dans ce cas, le logement pour préforme de chaque support comporte une face sur laquelle s'appuie au moins une partie du corps tubulaire de la préforme, une face adjacente sur laquelle repose une partie de la poignée et au moins un flanc de calage latéral de ladite poignée.

Selon un mode de réalisation, chaque support est monté libre en rotation dans le sens inverse de la rotation de la roue de transfert à l'encontre d'un moyen élastique. De la sorte, en cas de résistance à l'entraînement due à une entrave accidentelle, le support et sa préforme tournent et ne bloquent pas le mouvement de la roue.

L'art connu par le document précité EP-0 963 333 B concernant une telle sécurité contre un blocage intempestif est ici adapté pour tenir compte des spécificités d'une préforme à poignée.

Selon un mode de réalisation, le moyen de chargement des préformes comporte une rampe fixe en hélice aménagée à la verticale et au-dessus du mouvement circulaire des supports de la roue de transfert, et le long de laquelle la poignée de chaque préforme glisse en faisant tourner la préforme qui s'oriente angulairement en sortie pour tomber dans la position orientée voulue dans le support passant au-dessous de ladite rampe, mais il pourrait bien sûr s'agir de tout autre moyen.

L'invention sera bien comprise et d'autres particularités apparaîtront à la lecture de la description qui va suivre et qui se réfère aux dessins annexés, dans lesquels :
- La figure 1 montre schématiquement une chaîne de transfert selon un mode de réalisation de l'invention,
- la figure 2 représente en perspective une roue de transfert pouvant constituer une partie de la chaîne de transfert de la figure 1,
- la figure 3 représente un mode de réalisation légèrement différent de celui de la figure 2, et pour lequel on a retiré certains moyens pour une meilleure clarté.

La chaîne de transfert selon l'invention concerne le transfert de préformes telles que les préformes 1 visibles sur les dessins, chaque préforme étant pourvue d'un corps tubulaire 1 a et d'une poignée 1 b intégrée en vu de fabriquer des récipients munis d'une poignée, ici dans cet exemple sous la forme d'une anse.

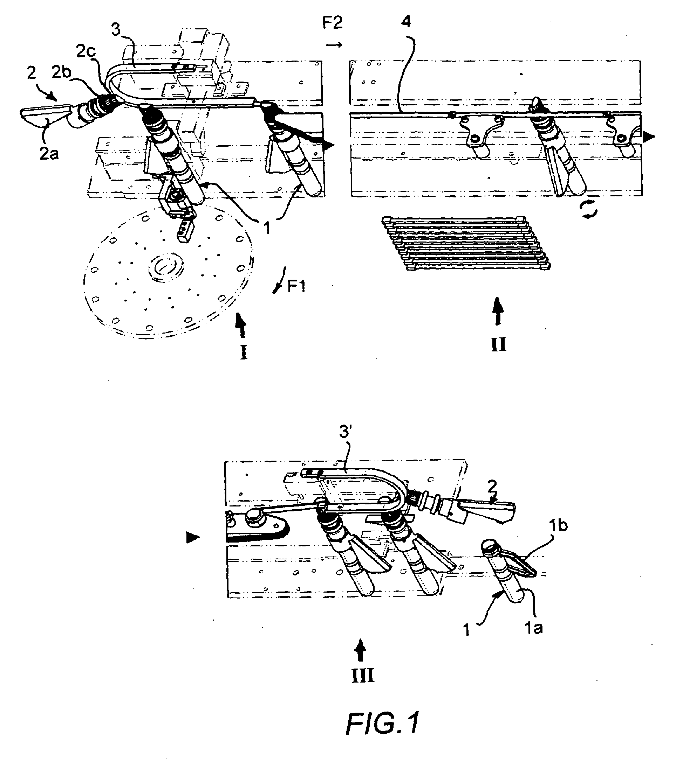

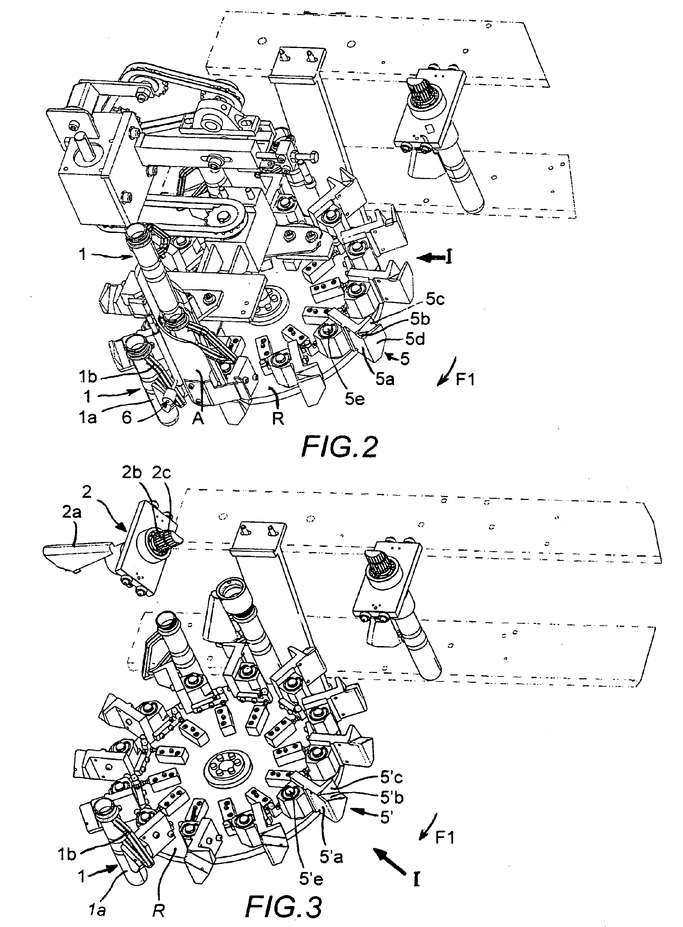

La chaîne de transfert selon l'invention est destinée à transporter de manière orientée les préformes à partir d'un poste d'arrivée schématisé en I sur la figure 1 et dont des exemples plus détaillés sont représentés sur les figures 2 et 3, vers un poste de moulage non représenté, mais via un poste de chauffage des préformes, comme un four, schématisé en II et un poste de reprise III prévu juste avant le poste de moulage, les postes I, II et III se suivant.

A la sortie du poste I, les préformes 1 se présentent de manière orientée angulairement autour de leur axe longitudinal, leur poignée étant dirigée dans ce mode de réalisation décrit à titre d'exemple, vers l'arrière par rapport à leur avancement.

La chaîne comporte une pluralité d'éléments mobiles 2 de préhension et de guidage des préformes pourvus de manière connue d'un protecteur 2a de forme correspondant à celles des poignées 1 b des préformes.

Les éléments 2 qui sont donc prévus pour venir prendre les préformes orientées, doivent être également convenablement orientés puisque les protecteurs desdits éléments doivent arriver positionnés correctement pour venir envelopper les poignées des préformes, et en conséquence être orientés, dans cet exemple, de manière à présenter leur protecteur 2a vers l'arrière par rapport au sens de leur avancement.

D'une manière également connue, les éléments mobiles 2 comportent chacun un mandrin destiné à s'introduire en partie dans le corps tubulaire 1 a de la préforme à transporter qui est toutefois ici disposée et transportée dans une position col en haut, tandis que ledit mandrin est pourvu d'un moyen d'entraînement en rotation sous la forme ici d'une roue dentée 2b pour des raisons qui seront expliquées ci-après.

Pour orienter comme il vient d'être dit les éléments 2 de préhension, un moyen d'orientation est prévu juste avant la sortie du poste d'arrivée I des préformes.

Le moyen choisi ici, comme le montre la figure 1, est une came 3 destinée à coopérer avec un guide 2c prévu sur l'élément de préhension 2, ledit guide formant une surface plane qui vient au contact de ladite came.

Dans le poste de chauffage II où l'on a schématisé des éléments radiants, les préformes sont entraînées en rotation et à cet effet, la roue dentée 2b de l'élément de préhension coopère avec un moyen conjugué du poste de chauffage, telle par exemple la courroie crantée 4 représentée.

A la sortie du poste de chauffage II, une autre came 3' est prévue pour de nouveau coopérer avec le guide 2c de chaque élément 2 et ainsi orienter de nouveau de la manière voulue les éléments et donc les préformes 1.

Les cames 3 et 3' se présentent ici, du fait du cheminement choisi pour les éléments 2, sous la forme de U couchés, les parties ouvertes se faisant face.

On remarquera en outre que le contact entre le guide 2c et la came 3 s'effectue d'un certain côté de ladite came et que le contact dudit guide avec la came 3' s'effectue de l'autre côté de telle sorte que les éléments 2 sont orientés en sens inverse à l'entrée et à la sortie du poste II, le protecteur 2a de chaque élément étant disposé, dans cet exemple, vers l'arrière au poste I par rapport au sens du mouvement selon les flèches F1 et F2 et vers l'avant en sortie du poste II, mais il est clair que l'orientation en sortie du poste II dépend de l'orientation voulue dans le poste de reprise III et/ou de l'orientation voulue par rapport au poste de moulage et donc, que les deux orientations sont possibles.

Au poste III, en sortie du poste II, les préformes sont dévêties, c'est-à-dire libérées des éléments 2, comme on peut le voir sur la figure 1, de telle sorte que chaque préforme est évacuée de manière orientée, le poste III constituant un poste de reprise dans lequel les préformes sont réparties par un dispositif écarteur et récupérées, par exemple par des pinces pour être introduites dans un poste de moulage (l'écarteur et les pinces ne faisant pas partie à proprement parler de l'invention, ne sont pas représentés).

La chaîne de transfert selon l'invention permet donc de maintenir l'orientation des préformes et de les présenter de manière choisie dans le poste de moulage, où la localisation des poignées est importante.

Sur les figures 2 et 3, on a représenté à titre d'exemple non obligatoire un poste I d'arrivée des préformes, lequel est simplement schématisé, comme déjà dit, sur la figure 1.

Ce poste comporte ici un moyen de chargement et d'orientation A (visible seulement sur la figure 2) de préformes 1, une roue de transfert R, tandis que l'on peut voir sur la figure 3 un élément de préhension 2 tel que décrit ci-avant.

Dans le but de conserver une orientation déterminée des préformes, angulairement autour de leur axe longitudinal afin que les poignées soient dans une position voulue, les moyens précités présentent des caractéristiques spécifiques.

Le moyen de chargement A disposé au-dessus de la roue de transfert R se présente ici (figure 2) sous la forme d'une rampe en hélice fixe sur laquelle les poignées 1b des préformes glissent de telle sorte qu'en sortie de la rampe les poignées sont orientées dans une position choisie. Toutefois, le moyen de chargement pourrait être tout autre, à partir du moment où il permet d'orienter les préformes pour alimenter convenablement la roue de transfert.

La roue de transfert R comporte une pluralité de supports 5, 5', disposés circulairement à la périphérie de ladite roue.

Le moyen de chargement A est disposé juste au-dessus du mouvement circulaire desdits supports 5, 5' afin d'alimenter chaque support avec une préforme 1.

Les supports 5, 5' présentent une face 5a, 5'a qui est dans ce mode de réalisation au moins en partie sensiblement verticale, ainsi qu'une face adjacente 5b, 5'b et un flanc intérieur 5c, 5'c.

La face en partie verticale 5a, 5'a est destinée à servir d'appui à au moins une partie du corps tubulaire 1 a de la préforme, la face adjacente 5b, 5'b à soutenir le dessous de la poignée 1b de la préforme, et le flanc 5c, 5'c à caler latéralement ladite poignée.

Dans l'exemple représenté, le dessous de la poignée présente un pan oblique et c'est pourquoi la face 5b, 5'b du support 5, 5' est avantageusement ici également oblique.

On remarquera aussi que dans cet exemple, l'orientation des poignées est effectuée par le moyen de chargement A de manière telle que celles-ci soient dirigées tangentiellement vers l'arrière par rapport au mouvement circulaire et au sens de rotation selon la flèche F1 de la roue R et donc des supports 5, 5'. Dans ce cas, la face 5a, 5'a d'un support est une face frontale par rapport au sens de rotation de la roue R selon ladite flèche F1.

Entre les supports 5 de la figure 2 et 5' de la figure 3, il y a un flanc supplémentaire 5d pour ledit support 5, disposé latéralement du côté extérieur.

D'autres moyens peuvent évidemment être prévus, comme par exemple le dispositif 6 de la figure 2 comportant un contrepoids et une barre, ce dispositif étant destiné à guider la préforme dans sa phase de mouvement entre le moyen de chargement A et le support 5. Ce dispositif 6 peut bien entendu être prévu aussi dans le mode de réalisation de la figure 3.

Avantageusement, chaque support 5, 5' est monté libre en rotation autour d'un axe 5e, 5'e, perpendiculaire à la roue R, dans le sens inverse de la rotation de cette dernière et à l'encontre d'un moyen élastique (non représenté) tel un ressort par exemple. Comme déjà dit ci-avant, cette disposition permet au support et à sa préforme en tournant, de ne pas bloquer le mouvement de la roue en cas d'entrave accidentelle.

Les éléments 2 de préhension sont mus par exemple sur des supports au moyen d'une motorisation (non représentés plus spécialement), pour arriver tangentiellement au mouvement circulaire des préformes 1, comme le montre bien la figure 3. En outre, les éléments sont orientés comme décrit ci-avant, de manière que le protecteur 2a de chaque élément puisse venir envelopper dans son mouvement la poignée 1 b de la préforme 1 à saisir.

## Revendications

1. Chaîne de transfert de préformes (1) d'un poste d'arrivée (I) des préformes vers un poste de moulage via un poste de chauffage (II) des préformes, pour préformes pourvues chacune d'un corps tubulaire (1a) et d'une poignée intégrée (1b), et comportant une pluralité d'éléments (2) mobiles de préhension et de guidage des préformes, pourvus chacun d'un écran ou protecteur (2a) de forme correspondant à celle de la poignée (1 b) de chaque préforme, le poste d'arrivée (I) des préformes étant aménagé pour présenter en sortie les préformes orientées de manière choisie angulairement autour de leur axe longitudinal, lesquelles préformes étant alors reprises par les éléments (2) mobiles de préhension qui sont en outre chacun mus dans le poste de chauffage (II), en translation et en rotation autour de l'axe longitudinal de la préforme, **caractérisée en ce qu'**un moyen d'orientation est prévu pour orienter chaque élément (2) de préhension et de guidage des préformes au voisinage de la sortie du poste d'arrivée (I) pour orienter lesdits éléments (2) afin que le protecteur (2a) de chacun d'entre eux vienne envelopper dans son mouvement la poignée (1b) de la préforme (1) et l'entraîner dans cette position jusqu'au poste de chauffage (II), tandis qu'à la sortie du poste de chauffage (II) est prévu un moyen de guidage et d'orientation destiné à orienter angulairement chaque élément (2) de préhension dans une position voulue avant de libérer chaque préforme de manière orientée dans un poste de reprise (III) des préformes.

2. Chaîne de transfert selon la revendication 1, **caractérisée en ce que** le moyen de guidage et d'orientation disposé à la sortie du poste de chauffage (II) est aménagé pour orienter chaque élément (2) de préhension en sens inverse du sens choisi au voisinage de la sortie du poste d'arrivée (I).

3. Chaîne de transfert selon l'une des revendications 1 ou 2 dans laquelle chaque élément mobile (2) de préhension comporte, outre le protecteur (2a), un mandrin destiné à s'introduire en partie dans le corps tubulaire de chaque préforme et comportant à sa partie supérieur un moyen d'entraînement en rotation (2b) destiné à coopérer avec un moyen conjugué (4) dans le poste de chauffage (II), **caractérisée en ce que** ledit mandrin comporte également un guide (2c) destinée à coopérer avec des cames (3,3') de guidage et d'orientation disposés, d'une part, en amont du poste d'arrivée (I) et d'autre part, en sortie du poste de chauffage (II).

4. Chaîne de transfert selon l'une des revendications 1 à 3, **caractérisé en ce que** le poste d'arrivée (I) des préformes comporte une roue de transfert (R) rotative qui est équipée d'un moyen de chargement (A) et d'orientation angulaire des préformes pour orienter chaque préforme dans une position angulaire déterminée autour de son axe longitudinal et qui est disposé au-dessus de ladite roue de transfert (R) rotative qu'il alimente, cette dernière étant munie d'une pluralité de supports (5,5') périphériques disposés circulairement et pourvus chacun d'un logement destiné à recevoir et soutenir verticalement par sa poignée (1b) une préforme (1) en la maintenant fixe en rotation autour de son axe longitudinal et de manière telle que ladite poignée soit dirigée tangentiellement par rapport au mouvement circulaire des supports, tandis que les éléments (2) de préhension sont mus au voisinage de la sortie de ladite roue de transfert pour arriver tangentiellement au mouvement circulaire des préformes.

5. Chaîne de transfert selon la revendication 4, **caractérisé en ce que** le logement pour préforme de chaque support comporte une face (5a,5'a) sur laquelle s'appuie au moins une partie du corps tubulaire (1a) de la préforme, une face adjacente (5b,5'b) sur laquelle repose une partie de la poignée et au moins un flanc (5c,5'c) de calage latéral de ladite poignée.

6. Chaîne de transfert selon l'une des revendications 4 ou 5, **caractérisé en ce que** chaque support (5,5') est monté libre en rotation dans le sens inverse de la rotation de la roue de transfert à l'encontre d'un moyen élastique.

7. Chaîne de transfert selon l'une des revendications 4 à 6, **caractérisé en ce que** le moyen de chargement (A) des préformes comporte une rampe fixe en hélice aménagée à la verticale et au-dessus du mouvement circulaire des supports (5,5') de la roue de transfert (R), et le long de laquelle la poignée (1 b) de chaque préforme glisse en faisant tourner la préforme qui s'oriente angulairement en sortie pour tomber dans la position orientée voulue dans le support (5,5') passant au-dessous de ladite rampe.

## Claims

1. Line for transferring preforms (1) from a receiving station (I) for the preforms to a moulding station via a station (II) for heating the preforms, for preforms each provided with a tubular body (1a) and an integral handle (1b), and comprising a plurality of moving elements (2) for gripping and guiding of the preforms, each provided with a screen or guard (2a) of shape corresponding to that of the handle (1b) of each preform, the receiving station (I) for the preforms being arranged to present at its exit the preforms orientated in a selected manner angularly about their longitudinal axis, said preforms then being picked up by the moving elements (2) for gripping which are also each moved in the heating station (II), in translation and in rotation about the longitudinal axis of the preform, **characterised in that** a means for orientation is provided to orientate each element (2) for gripping and guiding of the preforms in the vicinity of the exit of the receiving station (I) to orientate said elements (2) so that the guard (2a) of each of them in its movement comes to envelope the handle (1b) of the preform (1) and entrain it in this position to the heating station (II), whereas at the exit of the heating station (II) there is a means for guiding and orientation which is designed to orientate angularly each element (2) for gripping in a desired position before releasing each preform in orientated fashion in a collecting station (III) for the preforms.

2. Transfer line according to claim 1, **characterised in that** the means for guiding and orientation disposed at the exit of the heating station (II) is arranged to orientate each element (2) for gripping in the opposite direction to the selected direction in the vicinity of the exit of the receiving station (I).

3. Transfer line according to one of claims 1 or 2 in which each moving element (2) for gripping comprises, in addition to the guard (2a), a mandrel designed to be introduced in part into the tubular body of each preform and comprising in its upper portion a means for entrainment in rotation (2b) designed to co-operate with a matching means (4) in the heating station (II), **characterised in that** said mandrel also comprises a guide (2c) designed to co-operate with cams (3, 3') for guiding and orientation disposed firstly upstream of the receiving station (I) and secondly at the exit of the heating station (II).

4. Transfer line according to one of claims 1 to 3, **characterised in that** the receiving station (I) for the preforms comprises a rotary transfer wheel (R) which is equipped with a means for loading (A) and angular orientation of the preforms to orientate each preform in a given angular position about its longitudinal axis and which is disposed above said rotary transfer wheel (R) which it supplies, the latter being provided with a plurality of peripheral supports (5, 5') disposed in a circle and each provided with a housing designed to receive and vertically support a preform (1) by its handle (1b), holding it fixed in rotation about its longitudinal axis and such that said handle is directed tangentially in relation to the circular movement of the supports, whereas the elements (2) for gripping are moved in the vicinity of the exit of said transfer wheel to arrive tangentially to the circular movement of the preforms.

5. Transfer line according to claim 4, **characterised in that** the preform housing of each support comprises a face (5a, 5'a) on which at least a portion of the tubular body (1a) of the preform bears, an adjacent face (5b, 5'b) on which a portion of the handle rests and at least one flank (5c, 5'c) for lateral adjustment of said handle.

6. Transfer line according to one of claims 4 or 5, **characterised in that** each support (5, 5') is mounted free to rotate in the opposite direction to the rotation of the transfer wheel against an elastic means.

7. Transfer line according to one of claims 4 to 6, **characterised in that** the means for loading (A) of the preforms comprises a ramp fixed in a helix arranged vertically and above the circular movement of the supports (5, 5') of the transfer wheel (R), and along which the handle (1b) of each preform slides, turning the preform which is orientated angularly at the exit so as to fall in the desired orientated position into the support (5, 5') passing under said ramp.

## Patentansprüche

1. Transferstraße für Vorformlinge (1) von einer Ankunftsstation (I) der Vorformlinge zu einer Formstation über eine Heizstation (II) der Vorformlinge, für Vorformlinge, die jeweils mit einem rohrförmigen Körper (1a) und einem integrierten Griff (1b) versehen sind und eine Vielzahl an mobilen Elementen (2) zum Greifen und zum Führen der Vorformlinge aufweisen, wobei jedes mit einem Schirm oder Schutz (2a), dessen Form der des Griffs (1b) eines jeden Vorformlings entspricht, ausgestattet ist, wobei die Ankunftsstation (I) der Vorformlinge so ausgestaltet ist, dass am Ausgang die Vorformlinge in einem gewählten Winkel um ihre longitudinale Achse vorliegen, wobei die Vorformlinge dann über die mobilen Elemente (2) zum Greifen gefasst werden, die weiterhin in die Heizstation (II) bewegt werden, in Translation und in Rotation um die longitudinale Achse des Vorformlings, **dadurch gekennzeichnet, dass** ein Mittel zur Orientierung vorgesehen ist zur Orientierung eines jeden Elementes (2) zum Greifen und Führen der Vorformlinge in der Umgebung des Ausgangs der Ankunftsstation (I), um die genannten Elemente (2) zu orientieren, damit der Schutz (2a) eines jeden Elementes in seiner Bewegung den Griff (1b) des Vorformlings (1) umhüllt und in dieser Position bis zur Heizstation (II) mit sich führt, wohingegen am Ausgang der Heizstation (II) ein Mittel zum Führen und Orientieren zum Orientieren bezüglich des Winkels eines jeden Elementes (2) zum Greifen in eine gewünschte Position vorgesehen ist, bevor jeder Vorformling in orientierter Weise in eine Aufnahmestation (III) der Vorformlinge abgegeben wird.

2. Transferstraße gemäß Anspruch 1, **dadurch gekennzeichnet, dass** das Mittel zum Führen und Orientieren, das an dem Ausgang der Heizstation (II) vorliegt, zum Orientieren eines jeden Elementes (2) zum Greifen in zu der Richtung umgekehrter Richtung, die in der Umgebung des Ausgangs der Ankunftsstation (I) gewählt ist, ausgestaltet ist.

3. Transferstraße gemäß einem der Ansprüche 1 oder 2, in der jedes mobile Element (2) zum Greifen außer dem Schutz (2a) eine Drehspindel aufweist, die dafür ausgebildet ist, dass sie sich teilweise in den rohrförmigen Körper eines jeden Vorformlings einführt und an ihrem oberen Bereich ein Mittel zum Verursachen einer Rotation (2b) aufweist, das dazu vorgesehen ist, mit einem entsprechenden Mittel (4) in der Heizstation (II) zu kommunizieren, **dadurch gekennzeichnet, dass** die genannte Drehspindel auch eine Führung (2c) umfasst, die zum Zusammenarbeiten mit Vorrichtungen (3,3') zum Führen und zum Orientieren vorgesehen ist, die zum einen vor der Ankunftsstation (I) und zum anderen vor der Heizstation (II) liegen.

4. Transferstraße gemäß einem der Ansprüche 1 bis 3, **dadurch gekennzeichnet, dass** die Ankunftsstation (I) der Vorformlinge ein rotierbares Transferrad (R) umfasst, das mit einem Mittel zum Beladen (A) und zum Orientieren bezüglich des Winkels der Vorformlinge ausgestattet ist zum Orientieren eines jeden Vorformlings in einer determinierten Position bezüglich des Winkels um seine longitudinale Achse, und das über dem genannten rotierbaren Transferrad (R), das es versorgt, angeordnet ist, wobei letzteres mit einer Vielzahl an umfänglichen Halterungen (5, 5') ausgestattet ist, die kreisförmig angeordnet sind und von denen jede mit einem Sitz ausgestattet ist, der zur Aufnahme und vertikalen Unterstützung eines Vorformlings (1) über seinen Griff (1b) ausgebildet ist, wobei er den Vorformling rotationsfest im Bezug auf seine longitudinale Achse hält und der Griff tangential zu der kreisförmigen Bewegung der Aufnahmevorrichtung geführt wird, wohingegen die Elemente (2) zum Greifen in die Umgebung des Ausgangs des Transferrads bewegt werden, damit sie tangential zur kreisförmigen Bewegung der Vorformlinge ankommen.

5. Transferstraße gemäß Anspruch 4, **dadurch gekennzeichnet, dass** der Sitz für einen Vorformling einer jeden Aufnahmevorrichtung eine Fläche (5a, 5'a) aufweist, auf die sich zumindest ein Teil des rohrförmigen Körpers (1a) des Vorformlings stützt, eine anliegende Fläche (5b, 5'b), auf der ein Teil des Griffs liegt und zumindest eine Flanke (5c, 5.'c) zum seitlichen Keilen des genannten Griffs.

6. Transferstraße gemäß einem der Ansprüche 4 oder 5, **dadurch gekennzeichnet, dass** jede Halterung (5, 5') über ein elastisches Mittel in der der Rotation des Transferrads entgegengesetzten Rotationsrichtung frei drehbar montiert ist.

7. Transferstraße nach einem der Ansprüche 4 bis 6, **dadurch gekennzeichnet, dass** das Mittel zum Beladen (A) der Vorformlinge eine feste wendelförmige Rampe beinhaltet, die vertikal zu und oberhalb der zirkularen Bewegung der Halterungen (5, 5') des Transferrads (R) angebracht ist und entlang der der Griff (1b) eines jeden Vorformlings gleitet, wodurch der Vorformling gedreht wird, der beim Ausgang bezüglich des Winkels ausgerichtet ist, damit er in die beabsichtigte ausgerichtete Position in die Halterung (5, 5') fällt, die unter der genannten Rampe durchläuft.
